# EUROPEAN PATENT SPECIFICATION

(11) **EP 0 470 524 B1**
(45) Date of publication and mention of the grant of the patent: **07.06.1995**
(21) Application number: 91113054.0
(22) Date of filing: 02.08.1991
(51) Int. Cl.: A01C 1/04

(54) **Mat carrying seeds and method of producing the same**
Samenteppich und Verfahren zu dessen Herstellung
Tapis de semences et sa méthode de production

(30) Priority: 04.08.1990 JP 207098/90; 13.12.1990 JP 410636/90
(43) Date of publication of application: 12.02.1992
(73) Proprietor: NISSHOKU CORPORATION, Tsuyama City Okayama Prefecture (JP)
(72) Inventor: Taniguchi, Mituo, Tsuyama-city, Okayama-prefecture (JP); Fuzishima, Yasuyoshi, Tsuyama-city, Okayama-prefecture (JP); Hanamaki, Motonari, Kume-gun, Okayama-prefecture (JP); Shibata, Masashi, Kume-gun, Okayama-prefecture (JP)
(74) Representative: TER MEER STEINMEISTER & PARTNER GbR

(56) References cited:
- DE-A- 1 926 786
- FR-A- 2 238 416
- GB-A- 997 889
- US-A- 3 703 786
- US-A- 4 357 780

## Description

The present invention relates to a mat carrying seeds and a method of producing the same.

In the rearing of turf on the putting greens, the tee grounds, the fairways and the like of golf courses and the development of the turf surface of the green tract of parks, riverbeds and the like the turf seeds have usually been directly seeded by hand or sprayed or raw turf, such as Korai turf, has been planted.

However, in the direct seeding of the turf seeds by hand or by spraying, disadvantages occur in that the seeding and spraying are apt to be unevenly carried out and thus an unevenness is produced also in the germinating condition of the turf, so that it is difficult to form a uniform turf surface. In addition, the method of planting raw turf does not exhibit the above described problems but has the disadvantage of increased costs.

On the other hand, it has been tried to uniformly adhere turf seeds to a nonwoven fabric by spraying a water soluble adhesive to said turf seeds and then dropping the turf seeds on one side of said dispersible nonwoven fabric, in which roughly intertwined fibers and finely intertwined fibers are repeated lengthways and breadthways at suitable intervals, to form a mat carrying seeds and then stick said mat carrying seeds to the surface of the earth.

However, in the above described conventional mats carrying seeds, said fibers of the nonwoven fabric are intertwined lengthways and breadthways, so that the mat is not satisfying as to dispersibility. In addition, since the water-soluble adhesive is applied uneven in size, for example portions, to which large drops of a water-soluble adhesive are adhered, they are insufficiently dried and the dispersive nonwoven fabric absorbs water to be dispersed before the drying is completed. Thus, it has been difficult to obtain the desired mat carrying seeds.

Furthermore, in case of the mat carrying seeds for use in golf courses such as golf links, it is important to uniformly adhere a small quantity of turf seeds. But in the method according to which the water-soluble adhesive is sprayed to the turf seeds which are then dropped or sprinkled, the problem occurs that it is difficult to control a quantity of seeds applied, thus the seeds are apt to be seeded in a striped pattern, so that it is difficult to maintain the required uniformity.

US-A-4 357 780 discloses a mat carrying seeds prepared by spraying water-soluble adhesives onto said mat, spreading onto the adhesive a predetermined amount of seed and drying the adhesive. The mat consists essentially of randomly oriented, unmodified natural straw-like cellulosic fibers bonded together by spot contact bonding between contiguous fibers by a water-soluble adhesive, so that, accordingly, the straw-like fibers are intertwined cross-wise.

It is one object of the present invention to provide a useful mat carrying seeds capable of uniformity germinating to form a nice-looking turf. It is a further object of the present invention to provide a method of easily producing a mat carrying seeds capable of surely and fixedly adhering turf seeds and the like to a nonwoven fabric.

In order to achieve the above-described objects, the following measures are adopted in the present invention.

According to a first aspect of the present invention, there is provided a mat carrying seeds by means of a water-soluble adhesive characterized in that the mat comprises a water-soluble nonwoven fabric superior in dispersibility and comprises long fibers having a reduced width bound with a binder so as to be intertwined in one direction and turf seeds adhered to said nonwoven fabric by means of droplets of a foamed water-soluble adhesive having a diameter of 7 mm or less.

According to a second aspect of the present invention, there is provided a method of producing such a mat carrying seeds which comprises spraying droplets of a foamed water-soluble adhesive having a diameter of 7 mm or less onto a water-soluble nonwoven fabric superior in dispersibility and comprising long fibers having a reduced width bound with a binder so as to be intertwined in one direction, then seeding turf seeds onto said nonwoven fabric followed by sprinkling droplets of a foamed water-soluble adhesive having a diameter of 7 mm or less onto said seeded turf seeds.

The water-soluble adhesive is applied according to the present invention in the form of foam droplets having a diameter of 7 mm or less. As the water-soluble adhesive an aqueous solution of for example polyvinyl alcohol or a water-soluble starch material can be used, more preferably a 20 % aqueous solution of polyvinalyl alcohol. It is furtheron preferable that said binder comprises a water-soluble resin and a very small quantity of a water-repellent agent. In addition, it is preferable that 80% or more of said droplets of the foamed water-soluble adhesive have diameters within the range of 2 to 5 mm.

Since said fibers of said nonwoven fabric are intertwined merely in one direction, the nonwoven fabric is superior in dispersibility. Furthermore, since the nonwoven fabric is composed of said long fibers, the turf seeds can be prevented from being moved even though they are dispersed by water and thus the turf seeds on the nonwoven fabric can be effectively prevented from being biased. And, in the case where the binder of the nonwoven fabric is made of a mixture of said water-soluble resin and a very small quantity of said water-repellent agent, the nonwoven fabric has a suitable repellency.

That is to say, the water-soluble adhesive for adhering the turf seeds to the nonwoven fabric has the form of foam droplets having a diameter of 7 mm or less and the nonwoven fabric has a suitable repellency, so that, even though the water-soluble adhesive is sprinkled onto the nonwoven fabric before the turf seeds are seeded, the water-soluble adhesive is not absorbed by the nonwoven fabric during for example about 5 minutes. Accordingly, upon sprinkling the water-soluble adhesive and then the turf seeds onto the nonwoven fabric followed by sprinkling the water-soluble adhesive again, the adhesive is speedily dried without being absorbed by the nonwoven fabric, whereby the turf seeds can be fixedly adhered to and seeded on the nonwoven fabric.

In this mat carrying seeds the turf seeds are not separated from the nonwoven fabric during handling, such as transportation. Accordingly, when the turf seeds are grown, a uniform turf surface can be formed by laying such a mat carrying seeds on an object surface.
- **Fig. 1**: is a sectional view showing one example of a mat carrying seeds according to the present invention;
- **Fig. 2**: is a diagram showing the method of producing said mat carrying seeds; and
- **Fig. 3**: is a diagram showing the condition of the laid or planted mat carrying seeds.

The preferred embodiment of the present invention will be below described with reference to the drawings.

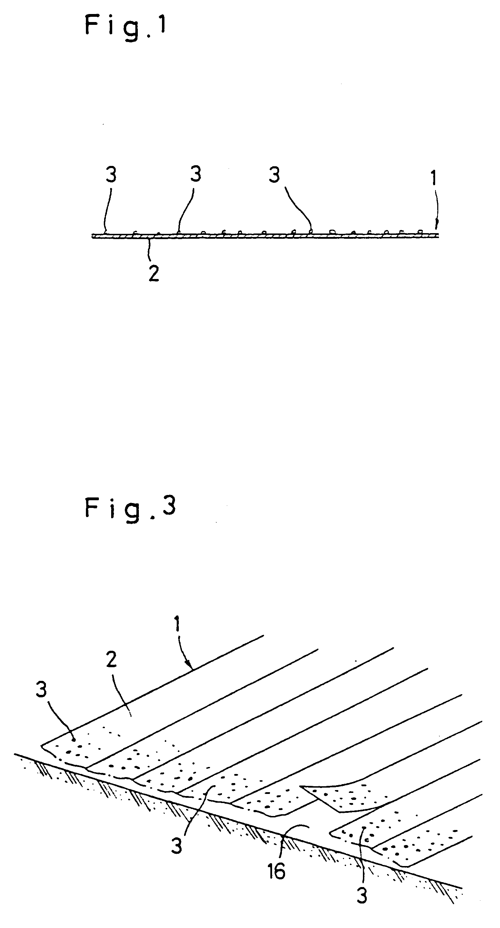

Figs. 1 to 3 show a preferred embodiment of the present invention. Referring to Fig. 1, reference numeral 1 designates a mat carrying seeds, reference numeral 2 designating a nonwoven fabric, and reference numeral 3 designating turf seeds seeded on one side of said nonwoven fabric 2 and adhered thereto by means of a water-soluble adhesive (mentioned later).

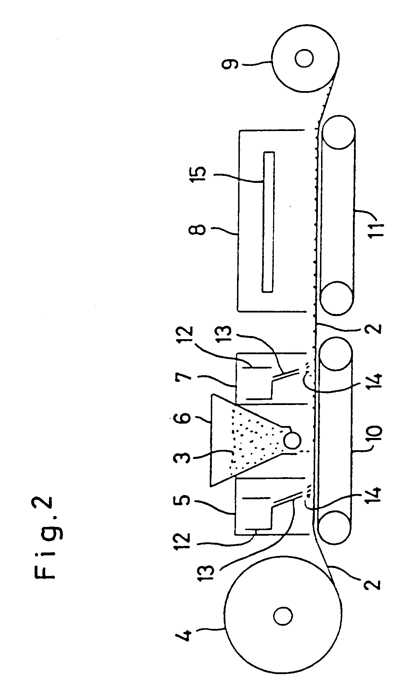

Said mat carrying seeds 1 is produced by the use of an apparatus such as shown in Fig. 2. Referring to Fig. 2, reference numeral 4 designates a nonwoven fabric roll, reference numeral 5 designates a first adhesive sprayer, reference numeral 6 designates a seeder, reference numeral 7 designates a second adhesive sprayer, reference numeral 8 designates a drier, reference numeral 9 designates a winding roll, and reference numerals 10, 11 designate conveyors.

A water-soluble nonwoven fabric superior in dispersibility comprising long fibers having a reduced width bound so as to be intertwined in one direction is preferably used as the nonwoven fabric 2 for use in said nonwoven fabric roll 4. Fibers having for example 1.5 deniers and a length of 51 mm are bound by the use of a binder made of a mixture of a water-soluble resin, such as polyvinyl alcohol (hereinafter referred to as PVA) having a low polymerization degree and a very small quantity of a water-repellent agent. The ratio (%) of said fibers to said water-soluble adhesive may be 80 : 20 by % and the unit area weight may amount to about 23 g/m². The nonwoven fabric roll 4 has a width of about 1,050mm and a length of about 1,050 mm. In addition, various kinds of said water-repellent agent, such agents of the silicone family, the fluorine family ones and the wax family, are mixed with PVA in a quantity of 1 to 4%, preferably 3 %. In the case where said mixture of the water-soluble resin and a very small quantity of the water-repellent agent is used as said binder, said turf seeds 3 can be firmly adhered to the nonwoven fabric 2 and thus the turf seeds 3 can be satisfactorily prevented from falling from the nonwoven fabric 2. When comparing the case, where the binder mixed with the water-repellent agent mixed is used, with the case, where the binder without the water-repellent agent is used, the number of the turf seeds fallen during the transportation of the mat carrying seeds in the former case was about 1/5 times than that in the latter case.

Said first adhesive sprayer 5 and said second adhesive sprayer 7 have the same known construction comprising for example a adhesive-housing tank 12 and a nozzle 13 so that the nonwoven fabric 2 unwound from the nonwoven fabric roll 4 and the nonwoven fabric 2 with the turf seeds 3 seeded may be supplied with the foamed adhesive 14.

It is desirable that the applied droplets of a foamed water-soluble adhesive 14 are adjusted so as to have diameters of 7 mm or less. It is more advantageous that 80% or more of them have diameters within the range of 2 to 5 mm. For example, a mixture of water, PVA and a vinyl acetate emulsion as a film-reinforcing agent can be used as such water-soluble adhesive 14. For example, for the manufacture of such a foamed water-soluble strands material, a 20%-solution of polyvinyl alcohol put in a pressure tank is subjected to an air pressure of 3 to 4 bar to be turned into a gelatinized foam which is passed through a hose connected with said pressure tank. The resulting foamy adhesive is sprayed by means of a nozzle on a nonwoven fabric 2, to which the turf seeds 3 are stuck, is increased and thus the adhesive effect is enhanced. According to the present invention, these foam droplets have a diameter of 7 mm or less. In case the strands of the foamed adhesive are too large, the nonwoven fabric is insufficiently dried and absorbs and disperses the water until the drying is completed.

Said seeder 6 is disposed between the first adhesive sprayer 5 and the second adhesive sprayer 7. A seeder having a known construction can be used as said seeder 6. As to the quantity of the turf seeds 3 seeded by means of the seeder 6, for example pencrossvent is singly seeded in a quantity of 8 g/m² in case of for example a mat carrying seeds 1 for use in the greens of golf courses, or, in order to make the uniform seeding easy, the turf seeds 3 comprising pencross, bentgrass and fillers, such as vermulite (expanded vermiculite), in case of need are seeded in a quantity of 20 g/m². In addition, the turf seeds 3 with short crown species, such as tall fescue, perennial ryegrass and Kentucky blue grass, suitable to sportsturfs added are seeded in a quantity of 55 g/m² in case of a mat carrying seeds for use in the tee grounds and the fairways of the golf courses or the development of the turf surface on the green tract of parks, riverbeds and the like. Furthermore, a water-holding material may be suitably added to the above described turf seeds 3.

Said drier 8 is provided with for example a hot wind source 15 using propane gas so that the nonwoven fabric 2 may be uniformly dried all over the width thereof.

The process of producing the mat carrying seeds 1 for use in for example the greens of the golf courses in said apparatus having the above described construction will be described below. The nonwoven fabric roll 4 is rotated in an appointed direction toward the first adhesive sprayer 5 from which the water-soluble adhesive 14 is uniformly sprayed and sprinkled at a spraying pressure of about 6 bar onto the nonwoven fabric 2 sent out from the nonwoven fabric roll 4.

Since the droplets of the foamed water-soluble adhesive 14 are adjusted so as to have diameters of 7 mm or less and they are adjusted so that 80% or more of them may have diameters within the range of 2 to 5 mm and additionally the nonwoven fabric 2 has a moderate repellency, the water-soluble adhesive 14 sprayed onto the nonwoven fabric 2 prior to the sprinkling of the turf seeds 3 is not absorbed by the nonwoven fabric 2 during about 5 minutes. The nonwoven fabric 2 with the water-soluble adhesive 14 sprayed thereonto is conveyed to the seeder 6 by means of said conveyor 10 where the nonwoven fabric 2 is supplied with the turf seeds 3 comprising pencrossvent and fillers in case of need. In this time, it is preferable to uniformly seed the turf seeds 3 in a quantity of 8 g/m².

The nonwoven fabric 2 with the turf seeds 3 seeded thereon is sent to the second adhesive sprayer 7 by means of the conveyor 10 where the water-soluble adhesive 14 is sprayed and sprinkled again onto the nonwoven fabric 2. The spraying conditions in this time are same as those in the first adhesive sprayer 5.

The reason why the water-soluble adhesive 14 is not immediately absorbed by the nonwoven fabric 2 even though the water-soluble adhesive 14 is sprayed before and after the sprinkling of the turf seeds 3 onto the nonwoven fabric 2, as above described, is as follows:

The nonwoven fabric 2 has a suitable repellency, so that, even though the water-soluble adhesive 14 is sprayed onto the nonwoven fabric 3 prior to the sprinkling of the turf seeds 3, the water-soluble adhesive 14 is not absorbed by the nonwoven fabric 2 during about 5 minutes. Upon sprinkling the turf seeds 3 and subsequently spraying the foamed water-soluble adhesive 14 again, the sprayed water-soluble adhesive 14 is speedily dried before it is absorbed by the nonwoven fabric 2, whereby the turf seeds 3 are fixedly adhered to and seeded on the nonwoven fabric 2.

The nonwoven fabric 2, onto which the water-soluble adhesive 14 has been sprayed by means of the second starch material sprayer 7, is sent to the drier 8 by means of the conveyors 10 and 11 where an appointed drying is carried out. The turf seeds 3 are uniformly adhered to and seeded on one side of the nonwoven fabric 2 to obtain the desired mat carrying seeds. The obtained mat carrying seeds is wound by means of said winding roll 9 to obtain a rolled mat carrying seeds. The obtained rolled mat carrying seeds is cut in a suitable length to obtain the mat carrying seeds 1 for use in the green of golf courses.

When using the mat carrying seeds 1 on the spot, the mat carrying seeds 1 is laid all over the surface 16 of the earth, where turf is to be planted and then a fill of a thickness of about 0.5 cm is made. Subsequently, water is sprinkled onto the mat carrying seeds 1 to turn the nonwoven fabric 2 into a wet condition, whereby the fibers are dispersed and rough portions of the fibers are cut by water drops to be made more rough, so that spaces are formed among the fibers. On the other hand, as soon as the turf seeds 3 is seeded on the nonwoven fabric 2 meet with water, the germinating action starts and germs bud through said spaces among the fibers. Since the nonwoven fabric 2 is composed of long fibers, so that, even though they are dispersed by water, the turf seeds 3 can be prevented from moving and thus the turf seeds 3 on the nonwoven fabric 2 can be prevented from being biased. Accordingly, a uniform condition of said germs on the nonwoven fabric 2 can be maintained. Subsequently, a uniform turf surface can be formed by suitably adding water, fertilizers and the like.

If desired, fertilizers, water-holding materials and the like maybe adhered to the nonwoven fabric 2 at the same time as the time the turf seeds 3 are adhered to the nonwoven fabric 2.

According to the present invention, the fibers of the nonwoven fabric for fixing the turf seeds are intertwined merely in one direction, so that the dispersibility is improved, and moreover, the nonwoven fabric is composed of long fibers, so that, even though the fibers are dispersed by water, the turf seeds can be prevented from moving and thus the turf seeds on the nonwoven fabric can be effectively prevented from being biased. In particular, in case where the mixture of the water-soluble resin and a very small quantity of water-repellent agent is used as a binder, the turf seeds can be prevented from falling from the nonwoven fabric during transportation and the like. Accordingly, a uniform and nice-looking turf surface can be easily formed and thus a great contribution to the plantation of turfs on the surface of the earth can be achieved.

## Claims

1. A mat carrying seeds (1) by means of a water-soluble adhesive (14) characterized in that the mat comprises a water-soluble nonwoven fabric (2) superior in dispersibility and comprises long fibers having a reduced width bound with a binder so as to be intertwined in one direction and turf seeds (3) adhered to said nonwoven fabric (2) by means of droplets of a foamed water-soluble adhesive (14) having a diameter of 7 mm or less.

2. The mat as set forth in claim 1, wherein the water-soluble adhesive (14) is a 20% solution of polyvinyl alcohol or a water-soluble starch material.

3. The mat as set forth in claim 1, wherein said binder comprises a water-soluble resin and a very small quantity of a water-repellent agent.

4. The mat as set forth in claims 1 to 3, wherein 80 % or more of said droplets of a foamed water-soluble adhesive (14) have diameters within the range of 2 to 5 mm.

5. A method of producing a mat carrying seeds (1) according to any of claims 1 to 4, which comprises spraying droplets of a foamed water-soluble adhesive (14) having a diameter of 7 mm or less onto a water-soluble nonwoven fabric (2) superior in dispersibility and comprising long fibers having a reduced width bound with a binder so as to be intertwined in one direction, then seeding turf seeds (3) onto said nonwoven fabric (2) followed by sprinkling droplets of a foamed water-soluble adhesive (14) having a diameter of 7 mm or less onto said seeded turf seeds (3).

## Patentansprüche

1. Matte (1), welche mittels eines wasserlöslichen Klebstoffs (14) Samen trägt, **dadurch gekennzeichnet**, daß die Matte ein wasserlösliches Faservlies (2), welches überlegene Dispergierbarkeit aufweist und Langfasern mit einer verringerten Breite umfaßt, welche mit einem Bindemittel so gebunden sind, daß sie in einer Richtung verschlungen bzw. verflochten sind, und Rasensamen (3) umfaßt, welche an dem Faservlies (2) mittels Tropfen eines geschäumten wasserlöslichen Klebstoffs (14) eines Durchmessers von 7 mm oder weniger haften.

2. Matte nach Anspruch 1, wobei der wasserlösliche Klebstoff (14) eine 20 %-ige Lösung von Polyvinylalkohol oder ein wasserlösliches Stärkematerial ist.

3. Matte nach Anspruch 1, wobei das Bindemittel ein wasserlösliches Harz und eine sehr geringe Menge eines wasserabweisenden Mittels umfaßt.

4. Matte nach den Ansprüchen 1 bis 3, wobei 80% oder mehr der Tropfen eines geschäumten wasserlöslichen Klebstoffs (14) Durchmesser innerhalb des Bereichs von 2 bis 5 mm aufweisen.

5. Verfahren zur Herstellung einer samentragenden Matte (1) nach mindestens einem der Ansprüche 1 bis 4, umfassend das Sprühen von Tropfen eines geschäumten wasserlöslichen Klebstoffs (14) mit einem Durchmesser von 7 mm oder weniger auf ein wasserlösliches Faservlies (2), welches überlegene Dispergierbarkeit aufweist und Langfasern mit einer verringerten Breite umfaßt, welche mit einem Bindemittel so gebunden sind, daß sie in einer Richtung verschlungen bzw. verflochten sind, danach Aussäen von Rasensamen (3) auf dem Faservlies (2) und anschließend Sprenkeln von Tropfen eines geschäumten wasserlöslichen Klebstoffs (14) mit einem Durchmesser von 7 mm oder weniger auf die ausgesäten Rasensamen (3).

## Revendications

1. Tapis portant des semences (1) au moyen d'une colle soluble dans l'eau (14) caractérisé en ce que le tapis comprend un tissu non tissé soluble dans l'eau (2) supérieur en dispersibilité et comprend des fibres longues ayant une largeur réduite liées par un liant de sorte d'être entrelacées dans une direction et des semences de gazon (3) collées audit tissu non tissé (2) au moyen de gouttelettes d'une colle moussante soluble dans l'eau (14) ayant un diamètre inférieur ou égal à 7 mm.

2. Tapis tel que présenté dans la revendication 1, dans lequel la colle soluble dans l'eau (14) est une solution à 20 % d'alcool polyvinylique ou un amidon soluble dans l'eau.

3. Tapis tel que présenté dans la revendication 1, dans lequel ledit liant comprend une résine soluble dans l'eau et une très faible quantité d'un agent imperméabilisant.

4. Tapis tel que présenté dans les revendications 1 à 3, dans lequel 80 % ou plus desdites gouttelettes d'une colle moussante soluble dans l'eau (14) a des diamètres compris entre 2 et 5 mm.

5. Procédé de production d'un tapis portant des semences (1) selon l'une des revendications 1 à 4, qui comprend la pulvérisation de gouttelettes d'une colle moussante soluble dans l'eau (14) ayant un diamètre inférieur ou égal à 7 mm sur un tissu non tissé soluble dans l'eau (2) supérieur en dispersibilité et comprenant des fibres longues ayant une largeur réduite liées par un liant de sorte d'être entrelacées dans une direction, puis le semis de semences de gazon (3) sur ledit tissu non tissé (2) suivi par l'aspersion sur lesdites semences de gazon semées (3) de gouttelettes d'une colle moussante soluble dans l'eau (14) ayant un diamètre inférieur ou égal à 7 mm.
